# EUROPÄISCHE PATENTSCHRIFT

(11) **EP 2 607 718 B1**
(45) Veröffentlichungstag und Bekanntmachung des Hinweises auf die Patenterteilung: **26.02.2014**
(21) Anmeldenummer: 11009945.4
(22) Anmeldetag: 19.12.2011
(51) Int. Cl.: F15D 1/02, G01F 1/66, G01F 15/00

(54) **Strömungsgleichrichter**
Flow straightener
Tranquilliseur de débit

(43) Veröffentlichungstag der Anmeldung: 26.06.2013
(73) Patentinhaber: SICK Engineering GmbH, 01458 Ottendorf-Okrilla (DE)
(72) Erfinder: Gurr, Andreas, 01127 Dresden (DE); Schröter, Gerry, 01239 Dresden (DE); Pfeifer, Andreas, 01465 Langebrück (DE)
(74) Vertreter: Lettau, Christoph

(56) Entgegenhaltungen:
- EP-A2- 1 775 560
- WO-A1-93/09353
- GB-A- 891 212
- US-A- 5 937 908
- US-A1- 2005 039 809

## Beschreibung

Die Erfindung betrifft einen Strömungsgleichrichter zur Konditionierung einer Fluidströmung durch ein Rohr.

Zum Beispiel bei der Messung der Geschwindigkeit eines Fluids (also eines Gases oder einer Flüssigkeit) in einem Rohr werden Ultraschallmesssysteme eingesetzt. Zum Beispiel werden dabei Ultraschallmesspulse schräg durch das durchströmte Rohr geschickt. In an sich bekannter Weise kann aus der Laufzeitdifferenz eines Ultraschallsignals, das auf diese Weise eine Bewegungskomponente in Richtung der im Rohr vorherrschenden Strömung hat, und eines Ultraschallsignals, das eine Bewegungskomponente entgegen der in dem Rohr vorherrschenden Strömung hat, die Geschwindigkeit des Fluids in dem Rohr ermittelt werden. Entsprechende Anordnungen zur Einstrahlung und zum Empfang von Ultraschallsignalen befinden sich dabei in einer Messsektion des Rohres.

Zum Beispiel durch gegebenenfalls stromaufwärts der Messsektion liegende Richtungs- und Querschnittsänderungen des Rohres, wie sie z.B. durch Krümmer, Diffusoren, Düsen oder Kombinationen derselben hervorgerufen werden, und/oder Einbauten (z.B. Blenden) verändert sich die Strömungssituation als Abweichung von einer geraden und voll entwickelten Rohrströmung. Um die Messung innerhalb der Messsektion möglichst wenig durch derartige Effekte zu beeinflussen, ist es wünschenswert, vor der Messsektion eine Strömungskonditionierung vorzunehmen, um das gestörte Strömungsprofil wieder in Richtung einer ungestörten Strömung zu konditionieren.

Ein aus dem Stand der Technik bekanntes Verfahren versucht die in der gestörten Strömung vorhandenen nicht-axialen Strömungsgeschwindigkeitskomponenten durch den Einbau von in Richtung einer ungestörten Strömung ausgerichteten Rohrelementen oder Blechen zu behindern. Dies dient der Reduzierung eines gegebenenfalls vorhandenen Dralls in der Strömung. Gegebenenfalls außerdem vorhandene Abweichungen von einem an sich rotationssymmetrischen axialen Geschwindigkeitsprofil werden jedoch durch solche Rohrelemente und Bleche wenig bis gar nicht ausgeglichen.

Andere Lösungen des Standes der Technik sehen den Einsatz von einer oder mehrerer Lochplatten im Strömungsquerschnitt vor. Damit lässt sich ein Aufbrechen der Impulsbilanz aller Geschwindigkeitskomponenten im gesamten Rohrquerschnitt erreichen. Ein gegebenenfalls nicht symmetrisches axiales Geschwindigkeitsprofil wird durch dieses Aufbrechen vergleichmäßigt. Lochplatten bilden jedoch eine vergleichsweise hohe Verblockung des Strömungsquerschnitts und damit einen Stau der Strömung an der Platte. Es entsteht daher ein signifikanter Druckverlust. Hinter der Lochplatte bilden sich außerdem sich durchmischende turbulente Freistrahlen, die gegebenenfalls eine akustische Belastung der Messsektion bewirken und insofern negativ für die Signalakustik einer Ultraschallmessung sind.

In der EP 1 775 560 A2 ist ein Strömungsgleichrichter für einen ultraschallbasierten Durchflussmesser offenbart, welcher zwei voneinander beabstandete und in Bezug auf die Strömungsrichtung gewundene Gleichrichtungsmittel umfasst. Die Gleichrichtungsmittel sind als eine Anordnung von schraubenartig gebogenen Stegen ausgebildet.

Der in der US 2005/0039809 A1 offenbarte Strömungsgleichrichter weist einen konischen Einlass und einen konischen Auslass auf, so dass sich im Querschnitt eine sanduhrähnliche Form ergibt. Im zentralen Bereich des Bauteils sind mehrere Strömungsleitwände angeordnet, welche spitz zulaufende Vorderkanten aufweisen.

In der US 5 937 908 A ist ein rohrförmiger Diffusor offenbart, welcher sich in Strömungsrichtung konisch erweitert. Zur Strömungsgleichrichtung sind ebenfalls konisch geformte Innenrohre vorgesehen.

Die WO 93/09353 A1 offenbart einen Strömungsumleiter, bei welchem mehrere spiralförmig gebogene Strömungsleitwände in einem verjüngten Rohr angeordnet sind.

Aufgabe der vorliegenden Erfindung ist es, eine wirkungsvolle Strömungskonditionierung in einem fluiddurchströmten Rohr mit möglichst geringem Druckverlust zur Verfügung zu stellen, wobei möglicherweise in der Strömung vorhandener Drall und Ungleichmäßigkeiten in der Verteilung der axialen Geschwindigkeiten wirksam eingeschränkt werden und der Einfluss der Strömungskonditionierung auf eine stromabwärts durchgeführte Messung möglichst gering bleiben sollen.

Diese Aufgabe wird mit einem Strömungsgleichrichter zur Konditionierung einer Fluidströmung durch ein Rohr mit den Merkmalen des Anspruchs 1 gelöst. Unteransprüche sind auf bevorzugte Ausgestaltungen gerichtet. Anspruch 8 betrifft ein Durchflussmesssystem zur Messung des Fluiddurchflusses durch ein Rohr mit einem erfindungsgemäßen Strömungsgleichrichter.

Der erfindungsgemäße Strömungsgleichrichter weist eine Engstelle mit einem verringerten Rohrquerschnitt auf. Zudem ist wenigstens ein innerhalb des Rohres angeordnetes ringförmiges Element vorgesehen, das einen Außendurchmesser aufweist, der geringer als der Innendurchmesser des Rohres an der axialen Position des ringförmigen Elements ist. Außerdem weist ein erfindungsgemäßer Strömungsgleichrichter wenigstens einen flächenförmigen Steg auf, dessen Flächennormale nicht parallel zur Rohrachse ausgerichtet ist.

Die Anordnung der genannten drei Elemente im gleichen axialen Bereich des Rohres führt zu einer vorteilhaften Zusammenwirkung und einer kompakten Anordnung.

Bei einer ungestörten Strömung, die also insbesondere keinen oder wenig Drall aufweist und deren axiales Geschwindigkeitsprofil im Wesentlichen rotationssymmetrisch ist, wird bei der erfindungsgemäßen Anordnung durch die vergleichsweise geringe Verblockung des Rohrquerschnitts sichergestellt, dass die ungestörte Strömung auch nur minimal gestört wird.

Erfindungsgemäß sind weiterhin mehrere flächenförmige Stege vorgesehen, die entgegen der Strömungsrichtung gepfeilt sind, d.h. derart angeordnet sind, dass sich der flächenförmige Steg der Strömung in der Rohrmitte entgegenstreckt. Ferner sind mehrere Stege vorgesehen, die in Stromrichtung gepfeilt sind, d.h. sich der Strömung im Bereich des Rohrrandes entgegenstrecken. Der Strömungsnachlauf eines Stegteils, der zunächst von der Strömung getroffen wird, wird bei einer solchen Anordnung noch einmal auf einen anders herum gepfeilten Steg treffen, so dass die drallreduzierende Wirkung verstärkt wird. Mit "Strömungsnachlauf' ist hier die Strömung im Anschluss an das jeweilige strömungskonditionierende Element gemeint.

Besonders ausgeprägt ist der drallreduzierende Effekt dadurch, dass sich erfindungsgemäß die entgegen der Strömungsrichtung gepfeilten Stege und die in Strömungsrichtung gepfeilten Stege in Umfangsrichtung des Rohres abwechseln. Die wechselnde Richtung der Stege induziert zusätzlich Scherströmung zwischen den Nachläufen, die sich in radialer Richtung mit jedem in Umfangsrichtung nächsten Steg entgegengesetzt orientieren.

Vorteilhafterweise sind der wenigstens eine Ring und der wenigstens eine flächenförmige Steg im Strömungsnachlauf der Engstelle angeordnet.

Durch die Zentrierung mit Hilfe der Engstelle wird die Drallachse eines gegebenenfalls vorhandenen Dralls in das Zentrum der Strömungskonditionierung verschoben. Ein oder mehrere Stege, deren Flächen sich vorteilhafterweise sowohl parallel zur Rohrachse als auch in dem Rohr radial nach außen erstrecken, behindern vorhandenen Drall effektiv. Durch die Zentrierung im Zentrum der Konditionierung werden die den Drall bestimmenden tangentialen Geschwindigkeitsanteile maximal auf die Seitenflächen des bzw. der Stege verteilt.

Ist die Flächennormale des wenigstens einen Steges vollständig senkrecht zur Rohrachse ausgerichtet, ist diese Wirkung am stärksten.

Grundsätzlich kann eine beliebige Anzahl von Stegen vorgesehen sein. Bei einer besonders bevorzugten Ausführungsform sind sechs Stege entgegen der Strömungsrichtung und sechs in Strömungsrichtung gepfeilt, die vorzugsweise abwechselnd in Umfangsrichtung angeordnet sind.

Eine einfache Ausführungsform umfasst jeweils drei in und drei entgegen der Strömungsrichtung gepfeilte Stege.

Durch die Engstelle wird die Strömung zentriert und beschleunigt, so dass sie den erfindungsgemäß vorgesehenen wenigstens einen Ring mit einem vergleichsweise hohen Impuls durchströmt. Die Strömung reißt an Positionen in Umfangsrichtung an der Ringhinterkante unterschiedlich ab, am stärksten am Ort mit den höchsten Axialgeschwindigkeiten. Auf diese Weise wird eine höhere Durchmischung in alle Richtungen erzeugt, wodurch eine gegebenenfalls vorhandene, nicht gleichmäßige Zuströmung mit unterschiedlichen axialen Geschwindigkeitskomponenten vergleichmäßigt wird.

Verstärkt werden kann diese Wirkung durch einen zweiten oder mehr Ringe gegebenenfalls mit unterschiedlichen Durchmessern und gegebenenfalls mit unterschiedlichen axialen Positionen.

Außerdem können die Profilformen des Rings scharfkantig gewählt werden, um den Effekt zu verstärken.

Unterschiedliche Durchmesser der einzelnen Ringe gewähren eine optimale Wirkung, da sie frei angeströmt werden können. Zum Beispiel kann das in Strömungsrichtung nachgeordnete ringförmige Element einen größeren Durchmesser aufweisen.

Wenigstens eines der ringförmigen Elemente befindet sich in einem axialen Bereich des Rohres, in dem die Wirkung der Engstelle auf die Strömung noch nicht abgeklungen ist. Insbesondere befindet sich dazu das in Strömungsrichtung vorgeordnete ringförmige Element (das also als erstes von der Strömung angeströmt wird) derart im axialen Bereich der wenigstens einen Engstelle, dass sich an der axialen Position des vorgeordneten ringförmigen Elements der Rohrquerschnitt nach der Engstelle noch nicht wieder vollständig auf den ursprünglichen Rohrquerschnitt erweitert hat.

Um eine optimale Zusammenwirkung der ringförmigen Elemente und des wenigstens einen Steges zu erreichen, ist bei einer vorteilhaften Ausführungsform mit wenigstens zwei ringförmigen Elementen wenigstens die Hälfte der axialen Ausdehnung des Steges im axialen Bereich zwischen den ringförmigen Elementen vorgesehen.

Eine einfache Ausgestaltung sieht vor, dass zumindest einer der Ringe zum Halten des wenigstens einen Steges verwendet wird.

Eine Weiterbildung des erfindungsgemäßen Strömungsgleichrichters weist ein Innenrohr mit geringerem Durchmesser als dem Durchmesser des durchströmten Rohres auf, wobei die Achse des Innenrohres vorzugsweise parallel zur und weiter bevorzugt gleich der Achse des durchströmten Rohres ist. Ein solches in der Mitte des Strömungsquerschnitts angeordnetes Innenrohr hat eine zusätzlich stabilisierende Wirkung insbesondere bei niedrigen Durchflüssen.

Eine einfache Ausgestaltung sieht vor, dass das Innenrohr von wenigstens einem Steg gehalten wird.

Die einzelnen Elemente der Strömungskonditionierung, also die Engstelle, das wenigstens eine ringförmige Element, der wenigstens eine flächenförmige Steg und gegebenenfalls das Innenrohr befinden sich vorteilhafterweise in einem gemeinsamen axialen Bereich des Rohres. Die axiale Ausdehnung der Kombination der strömungskonditionierenden Elemente ist vorzugsweise kleiner als der fünffache Rohrdurchmesser, besonders bevorzugt kleiner als der zweifache Rohrdurchmesser.

Insbesondere kann die axiale Ausdehnung der Stege vorteilhafterweise kleiner als der zweifache Rohrdurchmesser und besonders vorteilhafterweise kleiner als der einfache Rohrdurchmesser sein.

Sind mehrere ringförmige Elemente vorgesehen, ist ihr axialer Abstand ebenfalls vorteilhafterweise kleiner als der zweifache Rohrdurchmesser, besonders vorteilhafterweise kleiner als der einfache Rohrdurchmesser.

Das Rohr selbst kann ein- oder mehrteilig sein. Einzelne oder alle Komponenten des Strömungsgleichrichters können auch als Einbauten in ein vorhandenes Rohr vorgesehen sein.

Der erfindungsgemäße Strömungsgleichrichter mit einer Kombination aus Engstelle, ringförmigem Element und flächenförmigem Steg gewährleistet, dass jede Zuströmung mit nicht-axialen Geschwindigkeitskomponenten (also mit Drall) und Abweichungen von einem rotationssymmetrischen Profil proportional zu ihren Eigenschaften in Drall und Asymmetrie konditioniert wird. Starke Störungen werden stärker beeinflusst. So wird erreicht, dass die Konditionierung bei ungestörter Zuströmung kaum messbar ist. Zudem werden Störungen bei besonders ungünstigen Verhältnissen nicht auch noch zusätzlich angefacht.

Die erfindungsgemäße Anordnung kann prinzipiell jede Form einer gestörten Strömung konditionieren. Im Gegensatz zu herkömmlichen Konditionierungen wird bessere Wirkung mit wesentlich geringerem Druckverlust erzielt, was insbesondere durch das Zusammenwirken der einzelnen Elemente erreicht wird.

Die Erfindung ist weiterhin auf ein Durchflussmesssystem zur Messung eines Fluiddurchflusses durch ein Rohr gerichtet. Das erfindungsgemäße Durchflussmesssystem weist ein Messgerät zur Durchführung einer Messung an dem Fluid auf. Vorzugsweise ist eine Ultraschallmessung vorgesehen und insbesondere kann die Fluidgeschwindigkeit gemessen werden.

Stromaufwärts des Messgerätes ist ein erfindungsgemäßer Strömungsgleichrichter angeordnet. Die mit dem erfindungsgemäßen Strömungsgleichrichter erreichte Konditionierung der Strömung vermindert Störungen durch unregelmäßige Strömung, durch Drall, durch eine ungleichmäßige Verteilung der axialen Geschwindigkeitskomponenten oder durch ungünstige signalakustische Effekte auf Grund von Turbulenzen derart, dass die Bestimmung der Laufzeitdifferenz einer Ultraschallmessung zur Bestimmung der Fluidgeschwindigkeit sehr genau möglich ist.

Die Erfindung wird anhand eines erfindungsgemäßen Ausführungsbeispiels im Detail erläutert, das in den Figuren gezeigt ist. Dabei zeigen:
- Fig. 1: eine seitliche Draufsicht auf eine Ausführungsform eines erfindungsgemäßen Strömungsgleichrichters,
- Fig. 2: eine Draufsicht auf den Strömungsgleichrichter der Fig. 1 in der in Fig. 1 angegebenen Blickrichtung II,
- Fig. 3: eine schräge Draufsicht auf dieselbe Seite, die in Fig. 2 dargestellt ist,
- Fig. 4: eine Ansicht auf den Strömungsgleichrichter der Fig. 1 in der Blickrichtung IV, wie sie in Fig. 1 angegeben ist,
- Fig. 5: eine schräge Draufsicht auf dieselbe Seite, die in Fig. 4 gezeigt ist,
- Fig. 6: einen seitlichen Schnitt durch den Strömungsgleichrichter der Fig. 1 in einer Schnittebene, wie sie in Fig. 2 und 4 mit VI angegeben ist,
- Fig. 7: einen seitlichen Schnitt durch den Strömungsgleichrichter der Fig. 1 in einer Schnittebene, wie sie in den Fig. 1, 2 und 4 mit VII angegeben ist,
- Fig. 8: einen seitlichen Schnitt durch den Strömungsgleichrichter der Fig. 1 in einer Ebene, wie sie in den Fig. 2 und 4 mit VIII angegeben ist, und
- Fig. 9: einen schrägen Aufriss des Strömungsgleichrichters der Fig. 1.

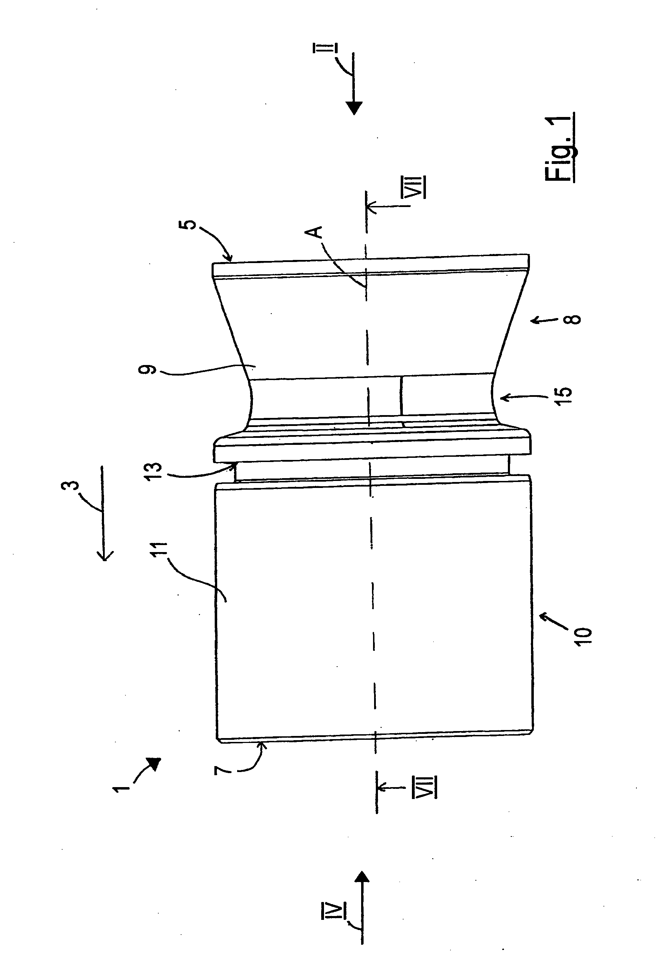

Fig. 1 zeigt in seitlicher Draufsicht einen Strömungsgleichrichter 1, der in ein von einem Fluid durchströmten Rohr z.B. als Zwischenglied eingesetzt werden kann. Bezugsziffer 3 bezeichnet die Flussrichtung des Fluids in dem Strömungsgleichrichter 1. Das Fluid strömt z.B. durch ein Zuflussrohr in den Strömungsgleichrichter 1 ein, das an dem in Fig. 1 rechts gezeigten Ansatz des Strömungsgleichrichters 1 in an sich bekannter Weise befestigt, z.B. angeflanscht ist. An der in Fig. 1 links gezeigten Seite strömt das Fluid wieder aus dem Strömungsgleichrichter 1 z.B. in ein Ausflussrohr ein, das ebenfalls in an sich bekannter Weise an der Seite 7 befestigt, z.B. angeflanscht ist. Bezugsziffer 5 bezeichnet dementsprechend die Einströmseite, während Bezugsziffer 7 die Ausströmseite bezeichnet. Der gezeigte Strömungsgleichrichter besteht aus zwei Teilen 8, 10 und umfasst zwei Rohrteile 9, 11, die bei dem Ansatz 13 in an sich bekannter Weise miteinander verbunden sind.

Ein erfindungsgemäßer Strömungsgleichrichter muss jedoch nicht aus zwei Teilen bestehen. Außerdem kann er auch direkt in einem durchströmten Rohr verwirklicht werden, ohne dass er ein zwischenzuflanschendes Einsatzteil darstellen würde.

Bezugsziffer 15 bezeichnet eine Engstelle im Rohrquerschnitt im ersten Teil 8 des Strömungsgleichrichters 1. Die Rohrachse ist mit A bezeichnet.

Abweichend von der gezeigten Ausführungsform, bei der das Rohr 9, 11 eine entsprechende Einbuchtung hat, kann die Engstelle auch durch einen querschnittsverringerndes Einbauelement in ein ansonsten gleichmäßiges Rohr erhalten werden.

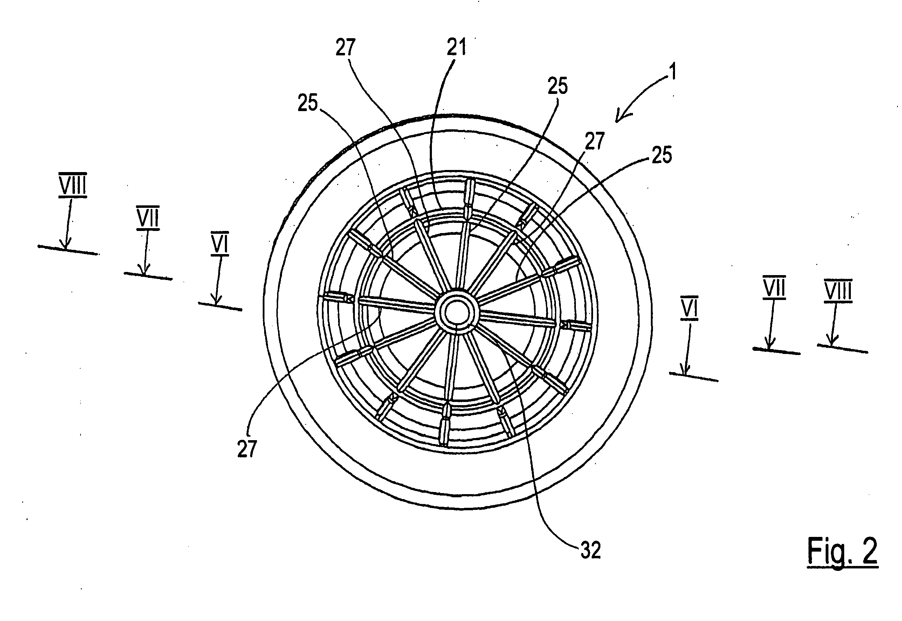

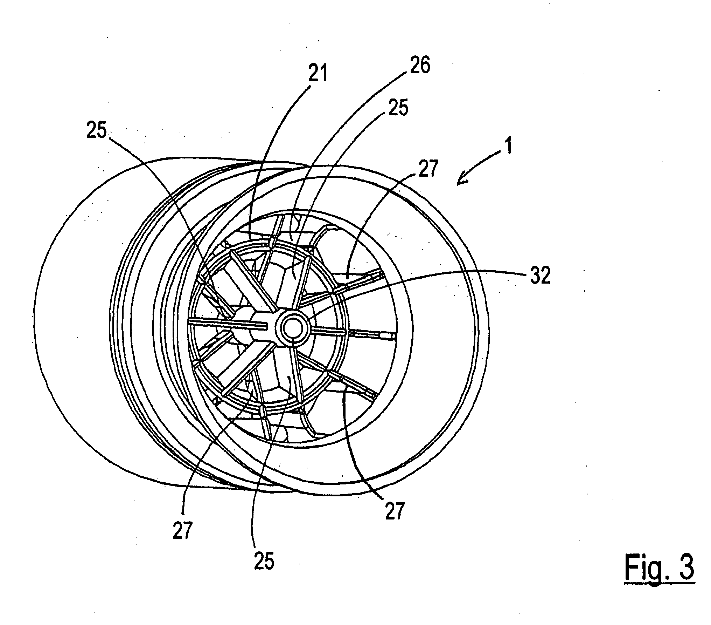

Fig. 2 zeigt eine Draufsicht auf die Einströmseite 5 des in Fig. 1 gezeigten Strömungsgleichrichters 1, also in der dort angegebenen Blickrichtung II. Fig. 3 zeigt ebenfalls eine Draufsicht auf die Seite 5 in leicht schräger Stellung. In Fig. 2 und 3 sieht man also durch die Engstelle 15 hindurch auf das Innenleben des Strömungsgleichrichters 1, das weiter unten näher erläutert werden wird.

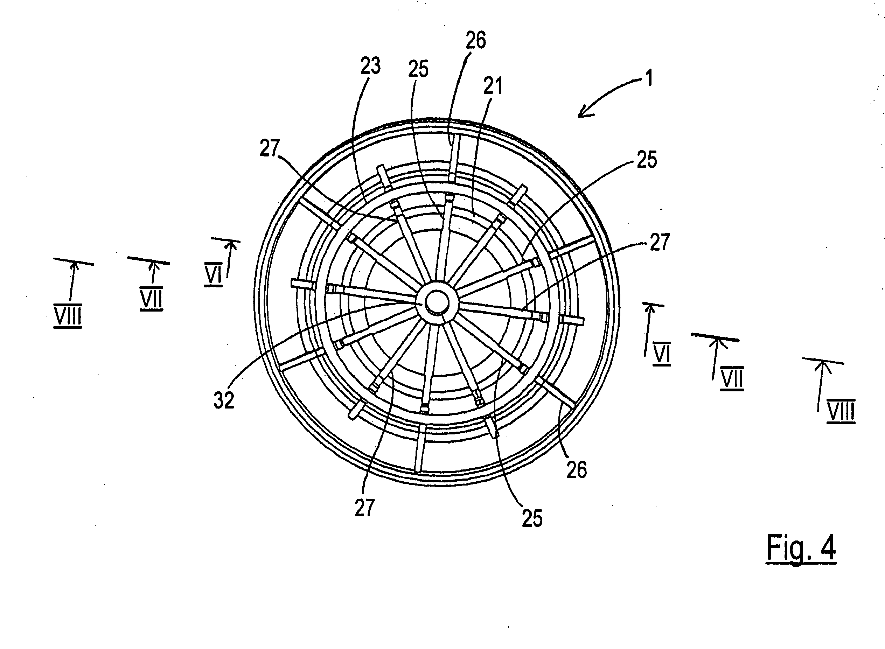

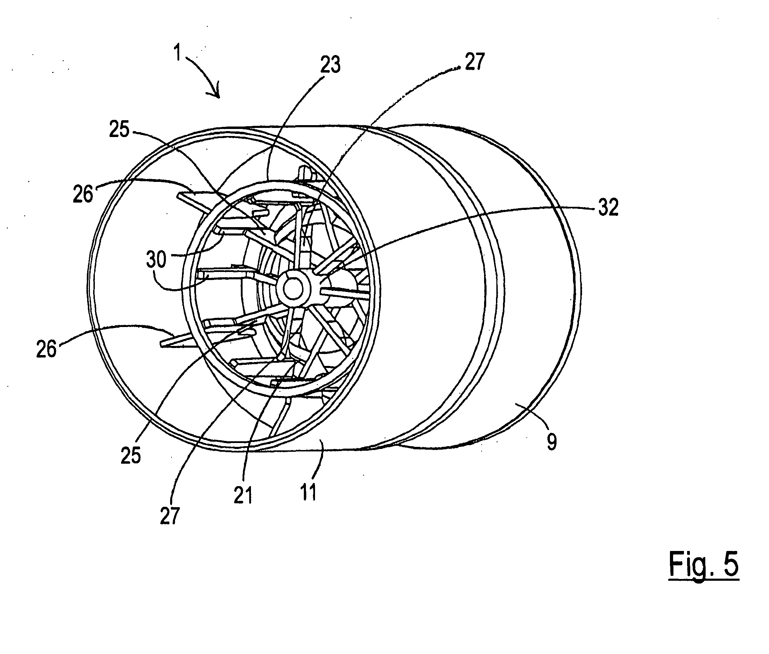

Fig. 4 zeigt einen Blick auf die Ausströmseite 7 in Blickrichtung IV, wie sie in Fig. 1 angedeutet ist. Fig. 5 zeigt eine Sicht auf dieselbe Seite des Strömungsgleichrichters in leicht schräger Stellung. Fig. 4 und 5 erlauben einen Blick auf das Innenleben des Strömungsgleichrichters 1, das weiter unten näher erläutert werden wird.

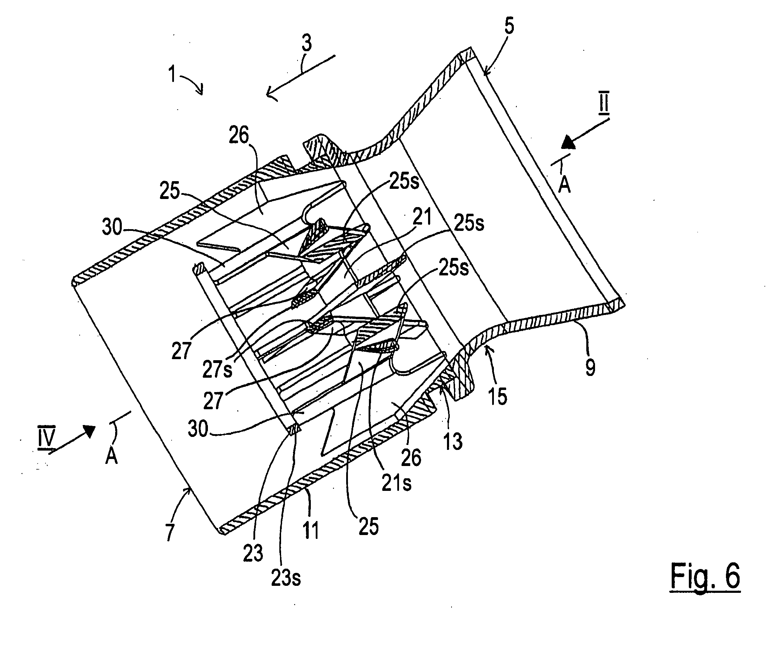

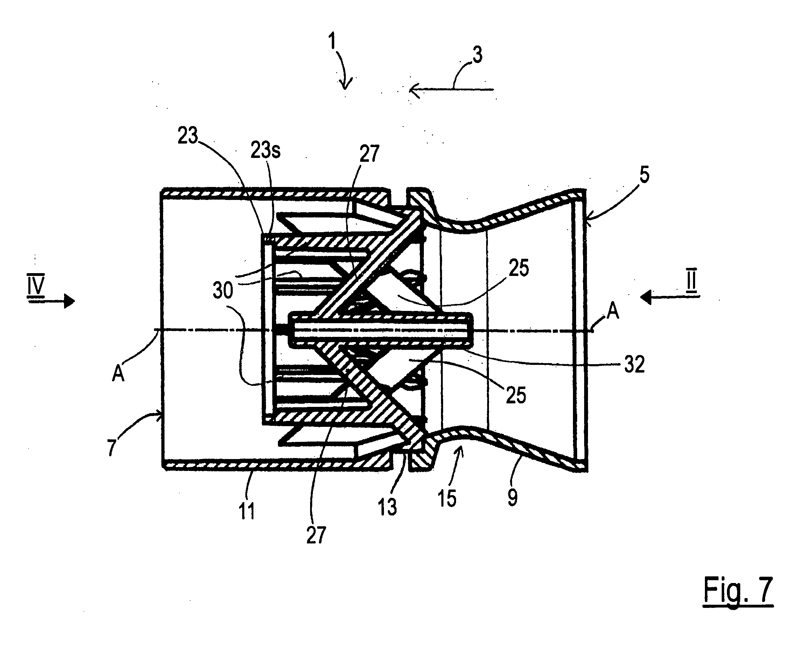

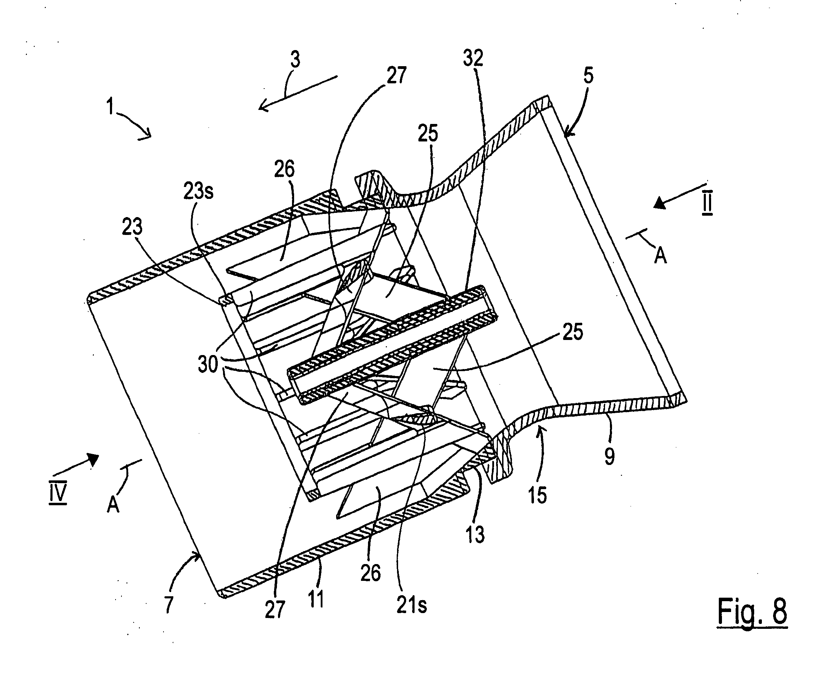

Fig. 6, 7 und 8 zeigen seitliche Schnitte durch den Strömungsgleichrichter 1 entlang der Schnittebenen, die in Fig. 2 mit VI, VII bzw. VIII angedeutet sind. In den Fig. 6, 7 und 8 sind außerdem die Blickrichtungen II und IV angegeben, die den Fig. 2 bzw. 4 entsprechen.

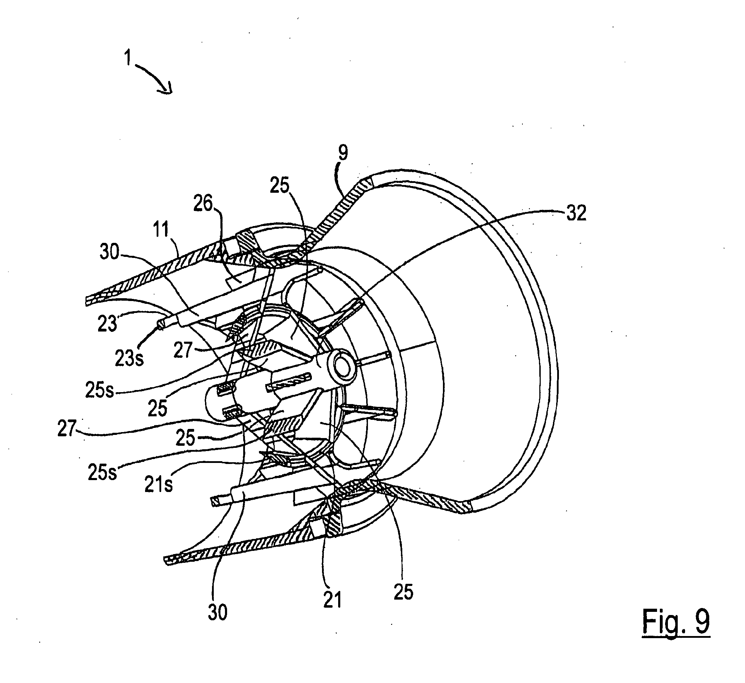

Zur besseren Verdeutlichung zeigt außerdem die Fig. 9 einen Aufriss des Strömungsgleichrichters 1 in schräger Ansicht.

Den Figuren ist zu entnehmen, dass sich innerhalb der zwei Teile 8, 10 des Strömungsgleichrichters 1 folgende Einbauten befinden:
Insbesondere in den Fig. 2, 3, 6, 8 und 9 ist ein erster Ring 21 gut zu erkennen. In den seitlichen Schnittansichten der Fig. 6, 8 und 9 sieht man deutlich auch dessen geschnittene Flächen 21 s.

Bei der gezeigten Ausführungsform ist der erste Ring 21 in Nachlaufrichtung scharfkantig ausgebildet.

In den Figuren ist weiterhin ein zweiter Ring 23 sichtbar, der in Nachlaufrichtung hinter dem ersten Ring 21 angeordnet ist. Der Ring 23 ist besonders gut in den Fig. 4, 5, 6, 7, 8 und 9 erkennbar. Die in den seitlichen Schnitten der Fig. 6, 7, 8 und 9 sichtbaren Schnittflächen des Ringes 23 sind mit Bezugsziffer 23s bezeichnet. Der Durchmesser des zweiten Rings 23 ist größer als der Durchmesser des ersten Rings 21. Durch die unterschiedlichen Durchmesser ist insbesondere gewährleistet, dass ein in Strömungsrichtung 3 strömendes Fluid beide Ringe voll treffen kann.

Außerdem sind in dem Strömungsgleichrichter 1 Stege 25, 27 vorgesehen, die sich radial nach außen und parallel zur Rohrachse A erstrecken.

Die ersten Stege 25 sind entgegen der Strömungsrichtung 3 gepfeilt, während die zweiten Stege 27 in Strömungsrichtung 3 gepfeilt sind. Der Begriff "Pfeilung" entgegen der Strömungsrichtung wird dabei benutzt, um für die Stege 25 anzudeuten, dass sie sich in der Rohrmitte der Strömung 3 entgegen erstrecken. Eine "in Richtung der Strömungsrichtung 3 gepfeilte" Steganordnung, wie sie die Stege 27 aufweisen, erstreckt sich in der Rohrmitte in stromabwärtiger Richtung.

Bei der gezeigten Ausführungsform sind sechs erste Stege 25 vorgesehen, die entgegen der Strömungsrichtung 3 gepfeilt sind, und sechs zweite Stege 27, die in Strömungsrichtung 3 gepfeilt sind. Diese zwei Sorten Stege 25, 27 sind im Wechsel angeordnet.

Mit Bezugsziffern 25s und 27s sind in den entsprechenden Schnittdarstellungen der Fig. 6, 7, 8 und 9 die Schnittflächen der Stege 25 bzw. 27 bezeichnet.

Die Stege 25 weisen radial außen angeordnete Bereiche 26 auf, mit denen sie innerhalb des Rohres des zweiten Strömungsgleichrichterteiles 11 befestigt sind.

Die radial äußeren Befestigungsteile 26 und die entgegen der Strömungsrichtung 3 gepfeilten Stege 25 können dabei einstückig ausgebildet sein und die gleiche Flächenausrichtung haben. Die Befestigungsteile 26 bilden dann jeweils einen Teil der Stege 25.

Alle Stege weisen bei der gezeigten Ausführungsform Fortsätze 30 auf, die den in Strömungsrichtung 3 stromabwärts liegenden Ring 23 tragen.

Insbesondere diejenigen Elemente, die mit dem ersten Ring 21, dem zweiten Ring 23, den gepfeilten Stegen 25, 27, den Befestigungsbereichen 26 und den Fortsätzen 30 zum Tragen des zweiten Rings 23 erkennbar sind, sind der Übersichtlichkeit halber in den Figuren nicht jeweils alle mit den entsprechenden Bezugsziffern markiert. Es sind jeweils nur repräsentative Bezugsziffern in die Figuren eingefügt.

Im achsnahen Bereich tragen die Stege 25, 27 ein Innenrohr 32, dessen Achse mit der Rohrachse A übereinstimmt.

Die axiale Ausdehnung der Anordnung aus Ringen 21, 23, Stegen 25, 27 und Innenrohr 32 ist bei dieser Ausführungsform etwa so groß wie der Innendurchmesser des Rohres des Strömungsgleichrichters 1 in einem Bereich, in dem sich die Engstelle 15 nicht befindet, also hier z.B. im Bereich des zweiten Rohrteils 11. Die Anordnung aus Ringen 21, 23, Stegen 25, 27 und Innenrohr 32 schließt sich in Strömungsrichtung 3 an die Engstelle 15 an.

Durch die Verbindung der entgegen der Strömungsrichtung 3 gepfeilten Stege 25 über das Innenrohr 32 bzw. über die Fortsätze 30 und den zweiten Ring 23 mit den in Strömungsrichtung 3 gepfeilten Stegen 27 ist der innere Aufbau des Strömungsgleichrichters 1 miteinander verbunden.

Getragen wird die Einheit von den Befestigungsbereichen 26 in den radial außen angeordneten Bereichen der Stege 25. Die gesamte Anordnung kann auch einstückig, zum Beispiel ein einstückiges Kunststoffteil sein.

Die gezeigte Ausführung kommt wie folgt zum Einsatz.

Der Strömungsgleichrichter 1 wird in ein Fluidrohr eingesetzt, wobei die gezeigte Ausführungsform als Zwischenstück in das Fluidrohr zwischengeflanscht wird. Im Nachlauf des Strömungsgleichrichters 1 (also in Fig. 1 auf der linken Seite) folgt stromabwärts z.B. ein Ultraschallmessgerät, mit dem in an sich bekannter Weise die Durchflussgeschwindigkeit eines Fluides, z.B. eines Gases, gemessen werden kann.

Störungen in der Strömung, wie sie z.B. durch Kurven, Engstellen oder ähnliches stromaufwärts (also in Fig. 1 auf der rechten Seite) in dem dem Strömungsgleichrichter 1 vorgeschalteten Fluidrohrbereich hervorgerufen werden, werden durch den Strömungsgleichrichter 1 wirksam bekämpft.

Dabei bewirkt die Engstelle 15 eine Zentrierung und eine Beschleunigung der Strömung. Der erste Ring 21 bricht die Kernströmung und Asymmetrie auf. Es entsteht eine erste Durchmischung im Nachlauf des Ringes 21, die ein ungleiches axiales Geschwindigkeitsprofil vergleichmäßigt. Der zweite Ring 23 verstärkt diese Wirkung.

Die gepfeilten Stege 25 und 27 und das Innenrohr 32 teilen den Nachlauf weiter und erhöhen die Durchmischung. Insbesondere ist dies bei einer Zuströmung mit Drall vorteilhaft. Durch die zuvor stattfindende Zentrierung der Strömung durch die Engstelle 15 wird eine Drallachse eines gegebenenfalls vorhandenen Dralls in das Zentrum der Rohrachse A hin verschoben. Auf diese Weise werden die den Drall bestimmenden tangentialen Geschwindigkeitsanteile maximal auf die Seitenflächen der Stege verteilt. Durch die wechselnde Pfeilung der Stege 25, 27 trifft der Nachlauf eines nach vorn gerichteten Steges ein weiteres Mal auf einen nach hinten gerichteten Steg. Die wechselnde Richtung der Stegpfeilung induziert außerdem zusätzlich Scherströmung zwischen den Nachläufen, da diese sich in radialer Richtung mit jedem in Umfangsrichtung nächsten Steg entgegengesetzt orientieren.

Das Zusammenwirken der Engstelle 15, den flächenförmigen Stegen 25, 27 und den Ringen 21, 23 dient also in besonders effektiver Weise der Strömungskonditionierung für eine möglichst ungestörte Messung im Nachlauf des Strömungsgleichrichters 1.

### Bezugszeichenliste

- 1: Strömungsgleichrichter
- 3: Fluidströmungsrichtung
- 5: Einströmseite
- 7: Ausströmseite
- 8: erster Teil des Strömungsgleichrichters
- 9: erstes Rohrteil
- 10: zweiter Teil des Strömungsgleichrichters
- 11: zweites Rohrteil
- 13: Ansatz
- 15: Engstelle
- 21: erster Ring
- 21s: geschnittene Fläche des ersten Rings
- 23: zweiter Ring
- 23s: geschnittene Fläche des zweiten Rings
- 25: entgegen der Strömungsrichtung gepfeilter Steg
- 25s: geschnittene Fläche des ersten Steges
- 26: Befestigungsbereiche zur Befestigung der Stege 25
- 27: in Strömungsrichtung gepfeilter Steg
- 27s: geschnittene Fläche des zweiten Steges
- 30: Fortsatz
- 32: Innenrohr
- A: Rohrachse
- II, IV: Blickrichtung
- VI, VII, VIII: Querschnittsfläche

## Patentansprüche

1. Strömungsgleichrichter (1) zur Konditionierung einer Fluidströmung, der folgendes umfasst:
- ein Rohr (9, 11) mit einer Engstelle (15) mit verringertem Rohrquerschnitt,
- wenigstens ein innerhalb des Rohres (9, 11) angeordnetes ringförmiges Element (21, 23), das einen Außendurchmesser aufweist, der geringer ist als der Innendurchmesser des Rohres (9, 11) im axialen Bereich des Rohres (9, 11), in dem das wenigstens eine ringförmige Element angeordnet ist, und
- wenigstens einen flächenförmigen Steg (25, 27), dessen Flächennormale nicht parallel zur Achse (A) des Rohres (9, 11) ist,
wobei
mehrere Stege (25) vorgesehen sind, die entgegen der Strömungsrichtung (3) gepfeilt sind, und mehrere Stege (27) vorgesehen sind, die in Strömungsrichtung (3) gepfeilt sind, **dadurch gekennzeichnet, dass** die entgegen der Strömungsrichtung gepfeilten Stege (25) und die in Strömungsrichtung gepfeilten Stege (27) in Umfangsrichtung des Rohres (9, 11) wechselweise angeordnet sind.

2. Strömungsgleichrichter (1) nach Anspruch 1, **dadurch gekennzeichnet, dass** die Flächennormale des wenigstens einen Steges (25, 27) senkrecht zur Richtung der Rohrachse (A) ist, wobei sich vorzugsweise die Fläche des wenigstens einen Steges (25, 27) in dem Rohr (9, 11) radial nach außen erstreckt.

3. Strömungsgleichrichter nach Anspruch 1 oder 2, **dadurch gekennzeichnet, dass** innerhalb des Rohres (9, 11) wenigstens zwei ringförmige Elemente (21, 23) angeordnet sind, die einen Außendurchmesser aufweisen, der geringer als der Innendurchmesser des Rohres (9, 11) im axialen Bereich des jeweiligen Ringes (9, 11) ist, wobei die wenigstens zwei ringförmigen Elemente (21, 23) vorzugsweise unterschiedlichen Durchmesser haben.

4. Strömungsgleichrichter nach Anspruch 3, **dadurch gekennzeichnet, dass** sich das in Strömungsrichtung vorgeordnete ringförmige Element (21) im axialen Bereich der wenigstens einen Engstelle (15) befindet.

5. Strömungsgleichrichter nach einem der Ansprüche 3 oder 4, **dadurch gekennzeichnet, dass** sich der wenigstens eine Steg (25, 27) mit wenigstens der Hälfte seiner axialen Ausdehnung im axialen Bereich zwischen den ringförmigen Elementen (21, 23) befindet.

6. Strömungsgleichrichter nach einem der Ansprüche 1 bis 5, **dadurch gekennzeichnet, dass** das wenigstens eine ringförmige Element (23) von wenigstens einem Steg (25, 27) gehalten wird.

7. Strömungsgleichrichter nach einem der Ansprüche 1 bis 6, **gekennzeichnet durch** wenigstens ein vorzugsweise von wenigstens einem Steg (25, 27) gehaltenes Innenrohr (32) mit geringerem Durchmesser als dem Durchmesser des Rohres (9, 11), wobei die Achse des Innenrohres (32) vorzugsweise parallel zur Rohrachse (A) des Rohres (9, 11) ist und weiter bevorzugt mit dieser übereinstimmt.

8. Durchflussmesssystem zur Messung eines Fluiddurchflusses durch ein Rohr mit
- einem Messgerät, vorzugsweise einem Ultraschallmessgerät, zur Durchführung einer Messung an dem Fluid, insbesondere seiner Geschwindigkeit, und
- einem stromaufwärts des Messgerätes angeordneten Strömungsgleichrichter (1) nach einem der Ansprüche 1 bis 7.

## Claims

1. A flow straightener (1) for conditioning a fluid flow which comprises the following:
- a pipe (9, 11) having a constriction (15) with a reduced pipe cross-section;
- at least one ring-shaped element (21, 23) which is arranged inside the pipe (9, 11) and which has an outer diameter which is smaller than the inner diameter of the pipe (9, 11) in the axial region of the pipe (9, 11) in which the at least one ring-shaped element is arranged; and
- at least one areal web (25, 27) whose surface normal is not in parallel to the axis (A) of the pipe (9, 11),
wherein
a plurality of webs (25) are provided which are inclined against the flow direction (3) and a plurality of webs (27) are provided which are inclined in the flow direction (3),
**characterized in that**
the webs (25) inclined against the flow direction and the webs (27) inclined in the flow direction are alternately arranged in the peripheral direction of the pipe (9, 11).

2. A flow straightener (1) in accordance with claim 1, **characterized in that** the surface normal of the at least one web (25, 27) is perpendicular to the direction of the pipe axis (A), with the surface of the at least one web (25, 27) in the pipe (9, 11) preferably extending radially outwardly.

3. A flow straightener (1) in accordance with one of the claims 1 or 2, **characterized in that** at least two ring-shaped elements (21, 23) are arranged inside the pipe (9, 11) which have an outer diameter which is smaller than the inner diameter of the pipe (9, 11) in the axial region of the respective ring (9, 11), with the at least two ring-shaped elements (21, 23) preferably having different diameters.

4. A flow straightener in accordance with claim 3, **characterized in that** the ring-shaped element (21) arranged upstream in the flow direction is located in the axial region of the at least one constriction (15).

5. A flow straightener in accordance with one of the claims 3 or 4, **characterized in that** the at least one web (25, 27) is located with at least half its axial extent in the axial region between the ring-shaped elements (21, 23).

6. A flow straightener in accordance with any one of the claims 1 to 5, **characterized in that** the at least one ring-shaped element (23) is held by at least one web (25, 27).

7. A flow straightener in accordance with any one of the claims 1 to 6, **characterized by** at least one inner pipe (32) preferably held by at least one web (25, 27) and having a smaller diameter than the diameter of the pipe (9, 11), with the axis of the inner pipe (32) preferably being in parallel to the pipe axis (A) of the pipe (9, 11) and further preferably coinciding therewith.

8. A throughflow measurement system for measuring a fluid throughflow through a pipe comprising
- a measurement device, preferably an ultrasound measurement device, for carrying out a measurement at the fluid, in particular its speed; and
- a flow straightener (1) in accordance with any one of the claims 1 to 7 arranged upstream of the measurement device.

## Revendications

1. Rectificateur d'écoulement (1) pour le conditionnement de l'écoulement d'un fluide, comprenant les éléments suivants :
- un tube (9, 11) avec un rétrécissement (15) où la section du tube est réduite,
- au moins un élément de forme annulaire (21, 23) agencé à l'intérieur du tube (9, 11), qui présente un diamètre extérieur plus petit que le diamètre intérieur du tube (9, 11) dans la région axiale du tube (9, 11) dans laquelle ledit au moins un élément de forme annulaire est agencé,
et
- au moins une barrette de formes aplatie (25, 27) dont la normale à la surface n'est pas parallèle à l'axe (A) du tube (9, 11),
dans lequel
il est prévu plusieurs barrettes (25), qui sont orientées en sens contraire à la direction d'écoulement (3) et il est prévu plusieurs barrettes (27) qui sont orientées dans la direction d'écoulement (3),
**caractérisé en ce que** les barrettes (25) orientées en sens contraire à la direction d'écoulement et les barrettes (27) orientées dans la direction d'écoulement (27) sont agencées en alternance en direction périphérique du tube (9, 11).

2. Rectificateur d'écoulement (1) selon la revendication 1, **caractérisé en ce que** la normale à la surface de ladite au moins une barrette (25, 27) est perpendiculaire à la direction de l'axe du tube (A), et de préférence la surface de ladite au moins une barrette (25, 27) dans le tube (9, 11) s'étend radialement vers l'extérieur.

3. Rectificateur d'écoulement selon la revendication 1 ou 2, **caractérisé en ce que**, à l'intérieur du tube (9, 11), sont agencés au moins deux éléments de forme annulaire (21, 23) qui présentent un diamètre extérieur plus petit que le diamètre intérieur du tube (9, 11) dans la région axiale du tube respectif (9, 11), et lesdits au moins deux éléments de forme annulaire (21, 23) ont de préférence des diamètres différents.

4. Rectificateur d'écoulement selon la revendication 3, **caractérisé en ce que** l'élément de forme annulaire (21) agencé en avant en direction d'écoulement se trouve dans la région axiale dudit au moins un rétrécissement (15).

5. Rectificateur d'écoulement selon l'une des revendications 3 ou 4, **caractérisé en ce que** ladite au moins une barrette (25, 27) se trouve avec au moins la moitié de son extension axiale dans la région axiale entre les éléments de forme annulaire (21, 23).

6. Rectificateur d'écoulement selon l'une des revendications 1 à 5, **caractérisé en ce que** ledit au moins un élément de forme annulaire (23) est tenu par au moins une barrette (25, 27).

7. Rectificateur d'écoulement selon l'une des revendications 1 à 6, **caractérisé par** au moins un tube intérieur (31), tenu de préférence par au moins une barrette (25, 27), avec un diamètre plus faible que le diamètre du tube (9, 11), et l'axe du tube intérieur (32) est de préférence parallèle à l'axe (A) du tube (9, 11) et, de manière encore plus préférée, coïncide avec celui-ci.

8. Système de mesure de débit pour la mesure du débit d'un fluide à travers un tube, comprenant
- un appareil de mesure, de préférence à un appareil de mesure à ultrasons pour exécuter une mesure sur le fluide, en particulier de sa vitesse, et
- un rectificateur d'écoulement (1) selon l'une des revendications 1 à 7, agencé en amont de l'appareil de mesure.
